(19) Europäisches Patentamt
European Patent Office
Office européen des brevets

(11) **EP 3 968 589 A1**

(12) **EUROPEAN PATENT APPLICATION**
published in accordance with Art. 153(4) EPC

(43) Date of publication:
**16.03.2022 Bulletin 2022/11**

(21) Application number: **20814802.3**

(22) Date of filing: **25.03.2020**

(51) International Patent Classification (IPC):
**H04L 27/26** $^{(2006.01)}$     **H04L 25/03** $^{(2006.01)}$

(52) Cooperative Patent Classification (CPC):
**H04L 25/03; H04L 27/26; H04L 27/34**

(86) International application number:
**PCT/CN2020/081244**

(87) International publication number:
**WO 2020/238371 (03.12.2020 Gazette 2020/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.05.2019 CN 201910465000**

(71) Applicant: **ZTE Corporation
Shenzhen, Guangdong 518057 (CN)**

(72) Inventors:
• **WU, Danwei
Shenzhen, Guangdong 518057 (CN)**
• **DENG, Ying
Shenzhen, Guangdong 518057 (CN)**

(74) Representative: **Raynor, Simon Mark
Murgitroyd & Company Milton Keynes
Altius House
1 North Fourth Street
Milton Keynes MK9 1DG (GB)**

(54) **PEAK CLIPPING METHOD AND APPARATUS BASED ON POLYPHASE STRUCTURE, AND COMPUTER STORAGE MEDIUM**

(57)     Provided are a crest factor reduction method and apparatus based on a polyphase structure, and a computer storage medium. The method includes: interpolating an input first in-phase quadrature (IQ) signal by m times and performing coordinate transformation to obtain amplitude information and phase information of the first IQ signal; screening the amplitude information to extract a maximum peak signal and performing peak search to determine a peak cancellation pulse signal; determining compensation phase information according to peak position information corresponding to the maximum peak signal, and determining a corresponding set of sub filter coefficients from polyphase filter coefficients based on the compensation phase information, the polyphase filter coefficients including at least two sets of sub filter coefficients; and completing peak-to-average ratio reduction processing according to the set of sub filter coefficients to obtain a signal after crest factor reduction.

| |
|---|
| Interpolate an input first IQ signal by m times and perform coordinate transformation to obtain amplitude information and phase information of the first IQ signal — S101 |
| Screen the amplitude information to extract a maximum peak signal and perform peak search to determine a peak cancellation pulse signal — S102 |
| Determine compensation phase information according to peak position information corresponding to the maximum peak signal, and determine a corresponding set of sub filter coefficients from polyphase filter coefficients based on the compensation phase information — S103 |
| Complete peak-to-average ratio reduction processing according to the set of sub filter coefficients to obtain a signal after crest factor reduction — S104 |

FIG. 1

**Description**

**CROSS REFERENCE TO RELATED APPLICATIONS**

This application claims the priority to Chinese Patent Application 201910465000.1, filed on May 30, 2019, which is incorporated herein by reference in its entirety.

**TECHNICAL FIELD**

Embodiments of the present invention relate to but are not limited to the field of communications, and specifically relate to but are not limited to a crest factor reduction method and apparatus based on a polyphase structure, and a computer-readable storage medium.

**BACKGROUND**

In the new generation of wireless communication system, modulation modes with relatively high spectrum utilization, such as QPSK (Quadrature Phase Shift Keying), 8PSK (Phase Shift Keying), 16QAM (Quadrature Amplitude Modulation), 64QAM, and 256QAM, are mostly used to modulate a phase and amplitude of a carrier, and an output signal has greatly fluctuating instantaneous power, thus generating non-constant envelope modulated signals with relatively large PAPR (Peak to Average Power Ratio: a ratio of peak power and average power). However, a signal with relatively large PAPR easily exceeds a saturation point of a power amplifier to result in signal compression, so as to affect output power of the power amplifier and reduce efficiency of the power amplifier. In order to reduce nonlinear distortion of the power amplifier, a method of reducing PAPR of a signal in a digital domain is usually used to achieve the purpose of preventing peak power of the signal from exceeding the saturation point of the power amplifier. Crest Factor Reduction (CFR) is a technique for reducing PAPR of a signal in the digital domain.

With the large-scale commercial use of the 4th Generation (4G) mobile communication Long Time Evolution (LTE) and the advancement of the 5th Generation (5G) mobile communication technical research, a signal processing bandwidth becomes wider and wider, and signal processing of hundreds of MHz or even up to GHz broad bands is usually supported. The intermediate-frequency crest factor reduction has increasingly high requirements for the signal processing rate with regard to a peak-to-average ratio reduction method for large bandwidth signals, while the peak-to-average ratio reduction performance of the traditional intermediate-frequency crest factor reduction algorithm will be degraded under the condition that the system processing rate is limited. The pulse cancellation crest factor reduction algorithm based on multi-carrier combined signals has been widely used in communication systems, but this crest factor reduction algorithm has the following two problems:

1) Performance degradation: in order to ensure a good performance index after crest factor reduction, in the traditional pulse cancellation crest factor reduction algorithm, it is required to be able to obtain accurate peak information of signals during processing and more precise alignment is required during peak cancellation. Therefore, the traditional crest factor reduction algorithm also has certain requirements for the data rate of incoming crest factor reduction signals, which is usually expected to be not less than twice the maximum configured bandwidth of the signals. When the rate requirement cannot be met, a phase error between a cancellation pulse and a main signal will be introduced during peak cancellation, and this phase error will reduce the PAPR and Error Vector Magnitude (EVM) performance of the signal after crest factor reduction.

2) High hardware overhead: with the development of mobile communication technology, the system processing bandwidth is increasingly wide, and the crest factor reduction algorithm has relatively high requirements for signal processing rate, so that the signal processing clock rate of a crest factor reduction module in a broadband system is increasingly high, which results in an exponential increase in the hardware overhead and power consumption cost required to implement the crest factor reduction function and eventually increases the hardware cost of the system.

**SUMMARY**

Embodiments of the present invention provide a crest factor reduction method and apparatus based on a polyphase structure, and a computer-readable storage medium, which mainly solve the technical problems of performance degradation and high hardware overhead in the traditional crest factor reduction algorithm of the related technology.

In order to solve the above technical problems, some embodiments of the present invention provide a crest factor reduction method based on a polyphase structure, including: interpolating an input first in-phase quadrature (IQ) signal by $m$ times and performing coordinate transformation to obtain amplitude information and phase information of the first IQ signal; screening the amplitude information to extract a maximum peak signal; determining compensation phase information according to peak position information corresponding to the maximum peak signal, and determining a corresponding set of sub filter coefficients from polyphase filter coefficients based on the compensation phase information, the polyphase filter coefficients including at least two sets of sub filter coefficients; and completing peak-to-average ratio reduction processing according to the set of sub filter coefficients to obtain a signal after crest factor reduction.

Some embodiments of the present invention further provide a crest factor reduction apparatus based on a polyphase structure, including: an interpolation module, configured to interpolate an input first IQ signal by $m$ times; a coordinate transformation module, configured to perform coordinate transformation on an interpolated first IQ information to obtain amplitude information and phase information of the first IQ signal; a peak screening module, configured to screen the amplitude information to extract a maximum peak signal; a compensation phase acquisition module, configured to determine compensation phase information according to peak position information corresponding to the maximum peak signal; a filter coefficient generation module, configured to determine a corresponding set of sub filter coefficients from polyphase filter coefficients based on the compensation phase information, the polyphase filter coefficients including at least two sets of sub filter coefficients; and a peak-to-average ratio reduction processing module, configured to complete peak-to-average ratio reduction processing according to the set of sub filter coefficients to obtain a signal after crest factor reduction.

Some embodiments of the present invention further provide a computer storage medium. The computer-readable storage medium stores one or more programs, and the one or more programs are executable by one or more processors to implement the operations of the above-mentioned crest factor reduction method based on a polyphase structure.

Other features and corresponding beneficial effects of the present invention are described in the latter part of the description, and it should be understood that at least part of the beneficial effects will become obvious from the illustration in the description of the present invention.

## BRIEF DESCRIPTION OF THE DRAWINGS

FIG. 1 is a schematic flowchart of a crest factor reduction method based on a polyphase structure according to a first embodiment of the present invention;
FIG. 2-a is a simulation diagram of an envelope position relationship between a traditional shaped cancellation pulse signal and a cancellation pulse signal in the first embodiment of the present invention;

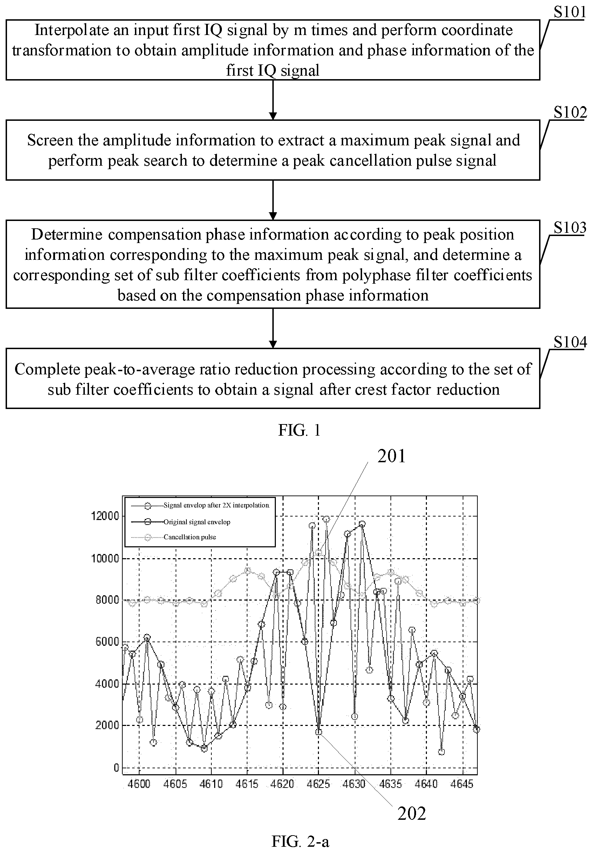

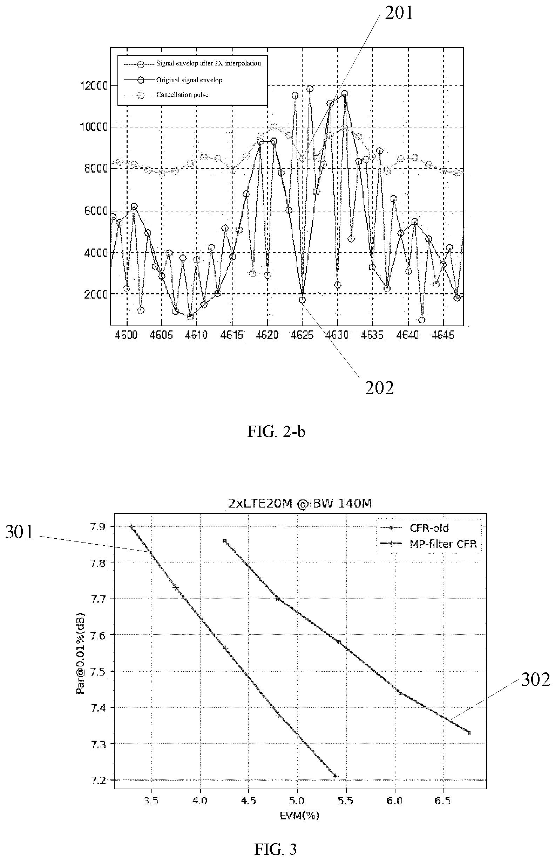

FIG. 2-b is a simulation diagram of an envelope position relationship between a shaped cancellation pulse signal and a cancellation pulse signal in the first embodiment of the present invention;
FIG. 3 is a simulation diagram of Par-EVM performance of the crest factor reduction solution in the first embodiment of the present invention compared with that of the traditional crest factor reduction solution after crest factor reduction;

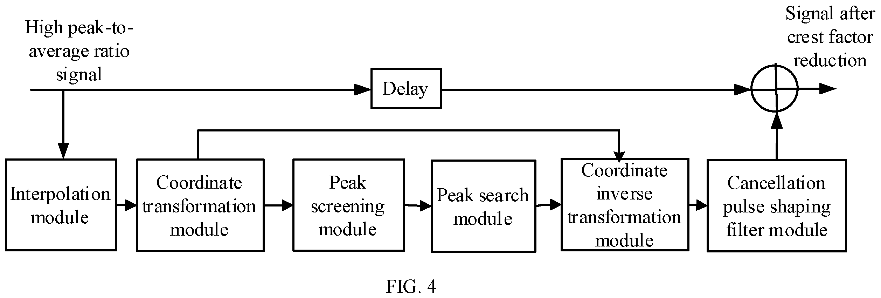

FIG. 4 is a structural diagram of a traditional combined crest factor reduction module apparatus according to a second embodiment of the present invention;

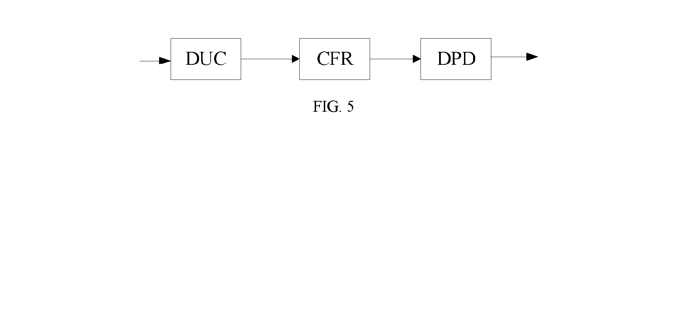

FIG. 5 is a schematic diagram showing the position of a combined crest factor reduction module according to the second embodiment of the present invention in a system;

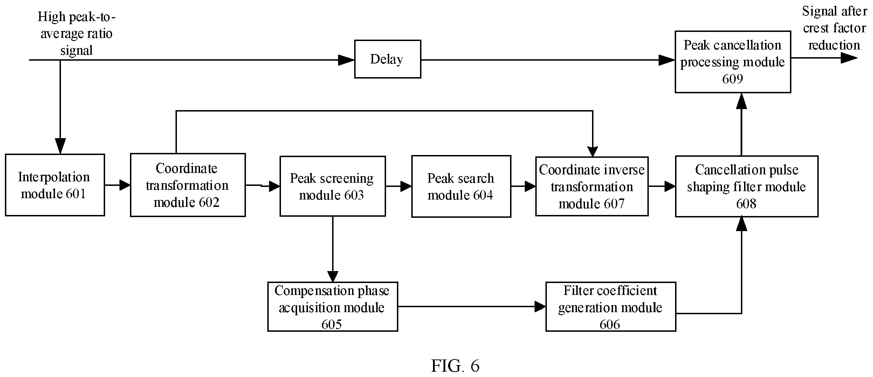

FIG. 6 is a schematic structural diagram of a crest factor reduction apparatus based on a polyphase structure according to the second embodiment of the present invention;

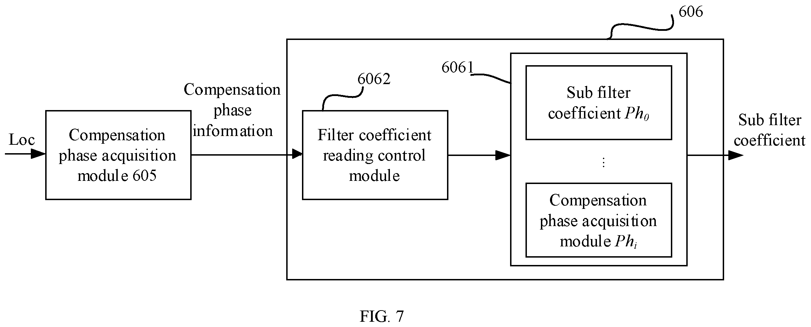

FIG. 7 is a schematic diagram of interactive information and internal structure of a compensation phase acquisition module and a filter coefficient generation module in the second embodiment of the present invention;

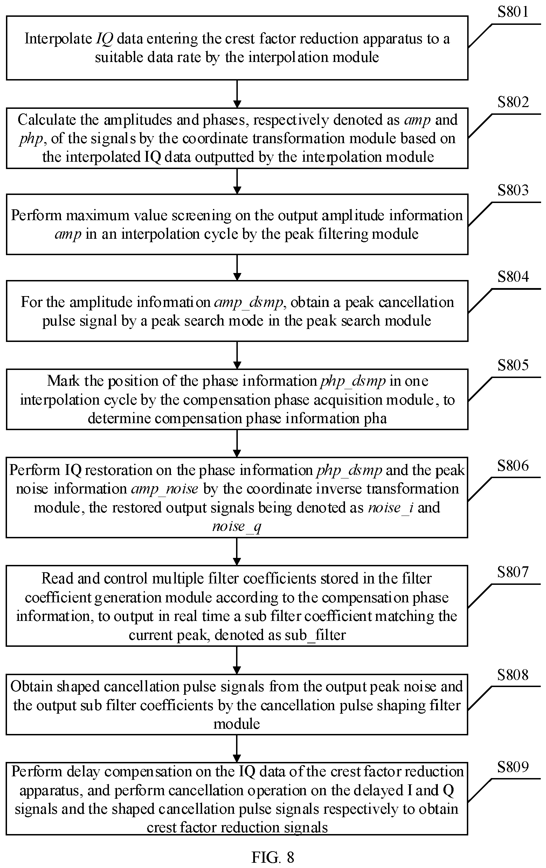

FIG. 8 is a step flowchart of a crest factor reduction method and apparatus based on a polyphase structure according to a third embodiment of the present invention.

## DETAILED DESCRIPTION

In order to make the objectives, inventive concept, and advantages of the present invention clearer, the embodiments of the present invention will be further described in detail below through specific implementations in conjunction with the accompanying drawings. It should be understood that the specific embodiments described here are only used to explain the present invention, and are not used to limit the present invention.

Embodiment 1:

In related technologies, all peak cancellation pulse shaping filtering in traditional intermediate-frequency combined crest factor reduction algorithm implementation schemes uses a set of fixed filter coefficients for processing. When a system processing rate is limited, the peak-to-average ratio reduction performance will degrade, the hardware overhead and power consumption cost required for the crest factor reduction function are exponentially increased. In order to solve the above problems, according to the difference in peak signal position information, a corresponding different set of filter coefficients is used to complete the shaping filter processing of a cancellation pulse signal in the embodiments of the present invention, referring to FIG. 1 for details. FIG. 1 shows a crest factor reduction method based on a polyphase structure according to an embodiment of the present invention, including:

In S101, an input first in-phase quadrature (IQ) signal is interpolated by *m* times and coordinate transformation is performed to obtain amplitude information and phase information of the first IQ signal.

In the embodiment of the present invention, in order to ensure better crest factor reduction performance, the input first IQ signal is interpolated by *m* times to obtain a high-speed sample of the signal and then obtain accurate peak information. The value of *m* may be flexibly adjusted according to actual needs. From the perspective of implementation resources, *m* is 2 or 4. It should be noted that the interpolation of the first IQ information in the embodiment of the present invention includes, but is not limited to, a half-band (HB) filter bank, Farrow filter interpolation, Lagrangian interpolation, and Newton interpolation; for example, primary or secondary HB filters are used to implement 2 times or 4 times interpolation.

The interpolated first IQ signal in the rectangular domain is transformed to the amplitude and phase of a polar coordinate domain by using the existing CORDIC (COordinate Rotation DIgital Computer) iterative algorithm, and the amplitude information and phase information are then divided into two channels for respective processing.

In S102, the amplitude information is screened to extract a maximum peak signal.

In the embodiment of the present invention, the peak screening and down-sampling processing of the amplitude information are completed within an interpolation cycle according to the interpolation multiple. Optionally, based on the principle of maximum value screening, a signal with a maximum amplitude value is extracted from each set of *m* pieces of information as the maximum peak signal for the amplitude information. The principle of maximum value screening includes:

$p(i) = \max[d_{ij}]$ $i = 0,1,2...$; $j=0,1,...,m-1$ (formula 1), where $p$ is the maximum peak signal, $m$ is the interpolation multiple, $d_{ij}$ is a data sampling point after interpolation, and $i$ is a corresponding sampling point identifier before interpolation.

Understandably, the length of the data after interpolation is changed from $i$ to $i*m$, a signal with a maximum amplitude is extracted from each set of *m* data for the interpolated data and outputted, and the purpose of down-sampling is achieved at the same time.

In this embodiment, after the amplitude information is screened to extract a maximum peak signal, peak search may also be performed on the extracted maximum peak information to determine peak cancellation pulse information. Optionally, threshold decision is performed on each maximum peak signal, the peak signal greater than a threshold is retained, and the peak signal less than the threshold is set to zero; maximum value screening is performed on the peak information greater than the threshold within a preset length search interval window, to determine a maximum peak within the preset length search interval window, and the remaining peak information is set to zero; and the threshold is subtracted from the maximum peak to obtain a peak cancellation pulse signal. For example, there are four maximum peak signals A, B, C, and D, and the threshold is X; whether the amplitudes of the signals A, B, C, and D are greater than the threshold X are determined, B is assumed to be less than X, then the amplitude information of B is 0, the A, C, and D are screened again within the preset search interval window, the amplitudes of the signals A and C less than the threshold X are set to 0, the maximum peak of D within the given interval window is retained, and finally the threshold X is subtracted from the maximum peak of D to obtain a peak cancellation pulse signal.

In some embodiments, before threshold decision is performed on each maximum peak signal, each maximum peak signal may also be preliminarily identified and screened; for example, peaks of signal amplitudes are first identified by three-point peak search, and signals that do not satisfy the peak search condition are set to 0; then threshold decision is performed on the signals that satisfy the peak search condition, and the peak signal with the amplitude greater than the threshold is retained. The peak search condition may be flexibly adjusted according to actual needs, for example, the peak search condition is greater than a preset crest factor reduction threshold, and the value of the crest factor reduction threshold is less than the value of the threshold.

In S103: compensation phase information is determined according to peak position information corresponding to the maximum peak signal, and a corresponding set of sub filter coefficients is determined from polyphase filter coefficients based on the compensation phase information.

After the maximum peak information is screened out, position information corresponding to the maximum peak at a high speed, namely peak position information (Loc), is determined, and then compensation phase information is generated. The optional range of the compensation phase information is related to the interpolation multiple. Specifically, the remainder obtained by dividing the peak position information by *m* is used as the compensation phase information; $pha = \text{Mod}(Loc, m)$ (formula 2), where $pha$ is the compensation phase information and is an integer, $pha \in [0,... ,m-1]$, and $m$ is the interpolation multiple.

In the embodiment of the present invention, a corresponding set of sub filter coefficients is determined from polyphase filter coefficients based on the compensation phase information, that is, which sub filter system of a polyphase filter suitable for the current maximum peak signal is determined based on the compensation phase information, the polyphase filter coefficients including at least two sets of sub filter coefficients. Since different positions of maximum peak signals correspond to different compensation phase information, the shaping filter processing of a cancellation pulse signal is completed according to the different set of filter coefficients corresponding to the different compensation phase information. Each piece of compensation phase information corresponds to a set of determined filter coefficients, which aims to process peaks of different characteristics using filters with different characteristics, thereby ensuring that the peak envelope time-domain characteristics of the shaped cancellation pulse signal and the cancellation pulse signal are more similar or matched, to ensure that the signal peak is effectively cancelled to achieve the purpose of improving crest factor reduction performance.

It should be noted that the polyphase filter coefficients in the embodiment of the present invention are calculated by the following formula 3:

$$f^{'}(k) = W \times [\sum_{i=1}^{M} e^{j2\pi(k-N)\times\frac{f_i}{m\times f_s}} \times g(k)]$$

$k = 0,1,...,N$ (formula 3), where $f'(k)$ is the polyphase filter coefficients, $W$ is a normalization factor, $M$ is the number of carriers, $g(k)$ is a filter coefficient under the interpolation $m$ times $m*f_s$ rate, and $N$ is the order of a filter at the rate of $m*f_s$; $f_i$ is a respective carrier frequency point corresponding to the up-sampling processing in a multi-carrier system, and $f_s$ is a data rate of the crest factor reduction input signal; $m$ in formula 3 is the interpolation multiple.

The relationship between each sub filter coefficient and $f'(k)$ is shown in formula 4:

$ph_i = f'[i : m : N]_{i\ =\ 0,1,...,m-1}$ (formula 4), where $ph_i$ is a sub filter coefficient, $m$ is the interpolation multiple, and $f'$ is the polyphase filter coefficients calculated by formula 3.

Here, which sub filter coefficient being selected based on the compensation phase information will be described. The correspondence relationship between the compensation phase information and the sub filter coefficient includes: based on the principle of parity, the sub filter coefficient corresponding to the compensation phase information is determined from the mapping relationship between the compensation phase information and the set of sub filters. The principle of parity is different according to the different interpolation multiples. When the interpolation multiple is 4, the polyphase filter $f'$ includes $4*n+1$ coefficients, where $n$ is a positive integer; and the sub filter coefficient corresponding to the compensation phase information is determined according to the mapping relationship between the compensation phase information corresponding to the odd or even number of $n$ and the sub filter. The mapping relationship between the compensation phase information and the sub filter is shown in Table 1. It is assumed that, when n=2, $f'$ includes 9 coefficients, which are divided into 4 sets of sub filters. Since $n$ is an even number, when the compensation phase information obtained is 0, the sub filter coefficient $Ph_0$ is determined according to the mapping relationship of Table 1.

Table 1

| Compensation phase information | Sub filter | |
|---|---|---|
| | $n$ is an even number | $n$ is an odd number |
| 0 | $Ph_0$ | $Ph_2$ |
| 1 | $Ph_3$ | $Ph_1$ |
| 2 | $Ph_2$ | $Ph_0$ |
| 3 | $Ph_1$ | $Ph_3$ |

When the interpolation multiple $m$ is 2, the $f'$ coefficient is divided into 2 items, each item corresponding to a set of filter coefficients. According to the odd or even number of the sub filter coefficient, the sub filter coefficient corresponding to the compensation phase information is determined from the mapping relationship between the compensation phase information and the set of sub filters. The compensation phase information includes 0 or 1, the compensation phase information 0 corresponds to the even sub filter $Ph_0$, and the compensation phase information 1 corresponds to the odd sub filter $Ph_1$.

In S104, peak-to-average ratio reduction processing is completed according to the set of sub filter coefficients to obtain a signal after crest factor reduction.

In the embodiment of the present invention, completing peak-to-average ratio reduction processing according to the set of sub filter coefficients to obtain the signal after crest factor reduction specifically includes: the coordinates of the peak cancellation pulse signal are inversely transformed and then subjected to cancellation pulse shaping filter processing together with the sub filter coefficients, to obtain a shaped cancellation pulse signal; and the shaped cancellation pulse signal is reversely superposed with a second IQ signal obtained by delaying the first IQ signal to obtain the signal after crest factor reduction.

The phase information corresponding to the maximum peak signal and the amplitude information corresponding to the peak cancellation pulse signal are converted by CORDUC iteration to an IQ pulse in the rectangular domain, and the IQ pulse is processed by a peak cancellation pulse shaping filter (CPG) corresponding to the sub filter coefficient to obtain the shaped cancellation pulse signal.

It is worth noting that the current crest factor reduction scheme may have the problem that: at a large bandwidth or a crest factor reduction rate less than 2 times the signal sampling bandwidth, the peak information extracted at a high data rate does not correspond to the peak position during low-rate cancellation processing. As shown in FIG. 2-a, in the traditional crest factor reduction scheme, the 4625 point 201 on the abscissa has the maximum cancellation pulse amplitude, while the signal to be canceled (202) is a point with a smaller amplitude, which is mainly caused by the deviation in the extraction of peak phase information after rate reduction. In the embodiment of the present invention, compensation phase information of a low-speed cancellation is acquired, and different filter coefficients are correspondingly obtained to filter cancellation pulses corresponding to different peaks, so that the phase-compensated shaped cancellation pulse signal and the modulus envelope signal of the cancellation pulse signal have substantially the same change trend, which ensures more accurate alignment between the peaks of the shaped cancellation pulse signal and the cancellation pulse signal. FIG. 2-b shows the crest factor reduction method of the present invention. The envelope shape change trends of signals 202 and 201 are the same. After the phase compensation is carried out according to the present invention, the peak can be effectively canceled, which can avoid damage to EVM caused by the fact that the peak of the signal is not effectively canceled in the presence of a phase deviation. As shown in FIG. 3, when the Par after crest factor reduction is the same, the deterioration of the EVM index after crest factor reduction 301 in the embodiment of the present invention is significantly smaller.

The crest factor reduction method based on a polyphase structure provided by the embodiment of the present invention differs from the existing crest factor reduction method that the cancellation pulse shaping filter coefficients are increased from one set to two or more sets, a set of suitable cancellation pulse shaping filter coefficients is selected for different peak signals to complete the shaping filter processing of cancellation pulses, and the peaks of different characteristics are processed using filters with different characteristics, thereby ensuring that the peak envelope time-domain characteristics of the shaped cancellation pulse signal and the cancellation pulse signal are more similar or matched, to ensure that the signal peak is effectively cancelled at a relatively low processing rate to achieve the purpose of improving crest factor reduction performance.

Embodiment 2:

FIG. 4 shows an apparatus for implementing a traditional intermediate-frequency combined crest factor reduction algorithm. In the traditional pulse cancellation crest factor reduction scheme, all peak cancellation pulse shaping filter modules use a set of fixed filter coefficients for processing. The apparatus mainly includes an interpolation module, a coordinate transformation module, a peak screening module, a peak search module, a coordinate inverse transformation module, and a cancellation pulse shaping filter module. The processing of reducing a peak-to-average ratio of a signal may be expressed by the general mathematical relationship 5 summarized below.

$$\check{Y} = \begin{cases} \check{X} - (|\check{X}| - thr) \otimes f(k) & |X| > thr \\ \check{X} & |X| =< thr \end{cases} \qquad \text{(formula 5)}$$

$\check{X}$ is an IQ signal inputted by a crest factor reduction module, $\check{Y}$ is an IQ signal outputted by the crest factor reduction module, *thr* is a crest factor reduction threshold, and $f(k)$ is a cancellation pulse shaping filter coefficient, which is a complex filter coefficient generated by a low-pass filter $g(k)$ after carrier frequency points identical to the processed signal are mixed and combined.

The mathematical formula of $f(k)$ is shown in formula 6:

$$f(k) = W \times \left[ \sum_{i=1}^{M} e^{j2\pi(k-N)\times\frac{f_i}{f_s}} \times g(k) \right] \qquad k = 0,1,...,N \qquad \text{(formula 6)}$$

Where $W$ is a normalization factor, $M$ is the number of carriers, $g(k)$ is a filter prototype coefficient, $f_i$ is each carrier frequency point corresponding to the up-sampling processing in a multi-carrier system, and $f_s$ is a data rate of the crest factor reduction input signal; $N$ is the order of the prototype filter $g(k)$ coefficient.

An embodiment of the present invention provides a crest factor reduction apparatus based on a polyphase structure, which can be applied to a transceiver of a mobile communication system. The location of the crest factor reduction apparatus in the system is shown in FIG. 5, and the intermediate-frequency crest factor reduction processing apparatus is located in an intermediate radio remote unit (RRU) of a wireless base station or an intermediate radio frequency processing board of a macro station. The crest factor reduction apparatus achieves digital domain processing, is usually located in a Digital Up Conversion (DUC) processing link, and is located in front of a Digital Pre-Distortion (DPD) processing module after multi-carrier combination.

As shown in FIG. 6, the crest factor reduction apparatus includes: an interpolation module 601, a coordinate transformation module 602, a peak screening module 603, a peak search module 604, a compensation phase acquisition module 605, a filter coefficient generation module 606, a coordinate inverse transformation module 607, a cancellation pulse shaping filter module 608, and a peak cancellation processing module 609.

The interpolation module 601 is configured to interpolate an input first IQ signal by m times. The interpolation module 601 includes a cascaded half-band (HB) filter bank, and by the HB filters the input IQ signal is interpolated by 2 times or 4 times to obtain a high-speed sample of the signal. The method of obtaining the high-speed sample of the signal is not limited to the HB filter bank, and the high-speed sample may also be obtained by Farrow filter interpolation, Lagrangian interpolation, Newton interpolation, etc.

The coordinate transformation module 602 is configured to perform coordinate transformation on the interpolated first IQ information to obtain amplitude information and phase information of the first IQ signal. The signal outputted by the interpolation module 601 is transformed from a rectangular coordinate system to a polar coordinate system through CORDIC to obtain the amplitude and phase information of the IQ signal.

The peak screening module 603 is configured to screen the amplitude information to extract a maximum peak signal. According to the interpolation multiple set by the interpolation module 601, the peak screening and down-sampling processing are completed in one interpolation cycle, and the peak signal is usually extracted according to the principle of maximum value screening, as shown in formula 7.

$$p(i)=\max[d_{ij}]\ i = 0,1,2...;\ j=0,1,...,m\text{-}1 \quad \text{(formula 7)}$$

Where $p$ is the output of the peak screening module 603, $m$ is the interpolation multiple, $d_{ij}$ is a corresponding data sampling point after interpolation, $i$ is a corresponding sampling point identifier before interpolation, and the length of data after interpolation is changed from $i$ to $i^*m$. This module functions to extract a signal with maximum amplitude from a set of $m$ interpolated data and output same, and also achieves the purpose of down-sampling. The peak screening module 603 transmits the screened-out high-speed position information corresponding to the maximum peak to the filter coefficient generation module 606.

The peak search module 604 is configured to perform a peak search on the maximum peak information outputted by the peak screening module 603 to determine a peak cancellation pulse signal. The peak search module 604 includes a threshold decision module, a peak re-search module and a noise extraction module. The threshold decision module is configured to perform threshold decision on the amplitude signals outputted by the peak screening module 603, retain the peak signals greater than a threshold, and set other signals to zero. The peak re-search module is configured to perform peak extraction on the peak signal outputted by the threshold decision module, based on the extraction principle: maximum value screening is performed on the signals greater than the threshold outputted by the threshold decision module within a preset length search interval window, the maximum peak within the preset length search interval window is retained, and the rest are set to zero. The noise extraction module is configured to subtract the threshold from the peak signal obtained by the peak re-search module to obtain a peak cancellation pulse signal.

The compensation phase acquisition module 605 is configured to determine compensation phase information according to peak position information corresponding to the maximum peak signal.

The filter coefficient generation module 606 is configured to determine a corresponding set of sub filter coefficients from polyphase filter coefficients based on the compensation phase information, the polyphase filter coefficients including at least two sets of sub filter coefficients.

Different from the traditional crest factor reduction apparatus, in which all the peak cancellation pulse shaping filter modules 608 in the traditional pulse cancellation crest factor reduction apparatus use a set of fixed filter coefficients for processing, in the embodiments of the present invention, compensation phase information of a low-speed cancellation is acquired by the filter coefficient generation module 606, and different filter coefficients are correspondingly obtained from the filter coefficient generation module 606 to filter cancellation pulses corresponding to different peaks, so that the phase-compensated shaped cancellation pulse signal and the modulus envelope signal of the cancellation pulse signal have substantially the same change trend, which ensures more accurate alignment between the peaks of the shaped cancellation pulse signal and the cancellation pulse signal. The compensation phase acquisition module 605 mainly functions to generate the compensation phase information. The compensation phase acquisition module 605 extracts the compensation phase information by screening out and determining different position information in an interpolation sequence during down-sampling of peak signals after interpolation inside the reduced crest. The extraction of the compensation phase information is obtained by calculating based on the peak position information of the peak screening module 603 at a high speed. The optional range of the compensation phase information is related to the interpolation multiple of the interpolation module 601. The extraction principle is expressed in the following formula 8. The remainder obtained by dividing the peak position information obtained by the peak screening module 603 by $m$ is used as the compensation phase information. The divisor $m$ here is consistent with the interpolation multiple in the interpolation module 601: $pha = \text{Mod}(Loc, m)$ (formula 8), where $pha$ is the compensation phase information and is an integer, $pha \in [0, \ldots, m\text{-}1]$, and $m$ is the interpolation multiple.

The filter coefficient generation module 606 is configured to determine which sub coefficient of the polyphase filter is applicable to the current peak according to the compensation phase information outputted by the compensation phase acquisition module 605, to allocate a set of suitable filter coefficients to different characteristic peaks, so as to complete the shaping filter processing of the cancellation pulse signal corresponding to the peak. The purpose of shaping filter is to ensure that the spectrum shape of the signal after crest factor reduction is consistent with the spectrum shape of the signal entering the crest factor reduction apparatus. The module 606 mainly functions to output a corresponding set of filter coefficients corresponding to the compensation phase information obtained by the compensation phase acquisition module 605.

As shown in FIG. 7, the input of the compensation phase acquisition module 605 corresponds to large peak position information Loc extracted by the peak screening module 603, and the output of the filter coefficient generation module 606 is a set of sub filter coefficients corresponding to the compensation phase information. The filter coefficient generation module 606 includes a filter coefficient set storage module 6061 and a filter coefficient reading control module 6062. The filter coefficient set storage module 6061 is configured to store the sub filter coefficients of the polyphase filter coefficient. The polyphase filter coefficients are calculated by the following formula 9:

$$f'(k) = W \times [\sum_{i=1}^{M} e^{j2\pi(k-N) \times \frac{f_i}{m \times f_s}} \times g(k)] \qquad k = 0, 1, \ldots, N$$

(formula 9), where $f(k)$ is the polyphase filter coefficients, $W$ is a normalization factor, $M$ is the number of carriers, $g(k)$ is a filter coefficient under the interpolation $m$ times $m^*f_s$ rate, and $N$ is the order of a filter at the rate of $m^*f_s$; $f_i$ is a respective carrier frequency point corresponding to the up-sampling processing in a multi-carrier system, and $f_s$ is a data rate of the crest factor reduction input signal; $m$ in formula 9 is the interpolation multiple.

The calculated $f(k)$ coefficients are divided into $m$ items, and each item corresponds to a set of filter coefficients, that is, the number of sub-phases included in the polyphase structure is m, which is stored in the filter coefficient set storage module 6061 in FIG. 7. The relationship between each sub filter coefficient in the filter coefficient set storage module 6061 and the $f'(k)$ is expressed by the following formula 10:

$$ph_i = f'[i : m : N] \quad i = 0, 1, \ldots, m\text{-}1 \qquad \text{(formula 10)}$$

Where, $ph_i$ is a sub filter coefficient outputted by the filter coefficient generation module 606, $m$ is the interpolation multiple, and $f'$ is the polyphase filter coefficients calculated by formula 9.

The filter coefficient reading control module 6062 is configured to, extract a corresponding set of sub filter coefficients corresponding to the compensation phase information from the filter coefficient set storage module based on the principle of parity and a mapping relationship between compensation phase information and sub filters. When the interpolation multiple is 4, the polyphase filter $f'$ includes $4^*n+1$ coefficients, where $n$ is a positive integer; and the sub filter coefficient corresponding to the compensation phase information is determined according to the mapping relationship between the compensation phase information corresponding to the odd or even number of $n$ and the sub filter. The mapping relationship between the compensation phase information and the sub filter is shown in Table 2.

Table 2

| Compensation phase information | Sub filter | |
|---|---|---|
| | $n$ is an even number | $n$ is an odd number |
| 0 | $Ph_0$ | $Ph_2$ |
| 1 | $Ph_3$ | $Ph_1$ |
| 2 | $Ph_2$ | $Ph_0$ |
| 3 | $Ph_1$ | $Ph_3$ |

As shown in Table 2, when $n$ is an even number, the filter coefficient reading control module 6062 extracts a sub filter coefficient $Ph_0$ from the filter coefficient set storage module 6061 according to the compensation phase information 0; when $n$ is an odd number, the filter coefficient reading control module 6062 extracts a sub filter coefficient $Ph_2$ from the filter coefficient set storage module 6061 according to the compensation phase information 0.

When the interpolation multiple $m$ is 2, the $f'$ coefficients are divided into 2 items, each item corresponding to a set of filter coefficients. According to the odd or even number of the sub filter coefficient, the sub filter coefficient corresponding to the compensation phase information is determined from the mapping relationship between the compensation phase information and the set of sub filters. The compensation phase information includes 0 or 1, the filter coefficient reading control module 6062 extracts an even sub filter $Ph_0$ from the filter coefficient set storage module 6061 according to the compensation phase information 0, and the filter coefficient reading control module 6062 extracts an odd sub filter $Ph_1$ from the filter coefficient set storage module 6061 according to the compensation phase information 1.

The coordinate inverse transformation module 607 is configured to perform coordinate inverse transformation on the peak cancellation pulse signal outputted by the peak search module 604, that is, perform inverse transformation from a polar coordinate system to a rectangular coordinate system on the peak cancellation pulse signal outputted by the peak search module 604, where the transformed signal is expressed in the form of IQ.

The cancellation pulse shaping filter module 608 is configured to perform cancellation pulse shaping filter processing on the signal outputted by the coordinate inverse transformation module 607 and the sub filter coefficients outputted by the filter coefficient generation module 606 to obtain a shaped cancellation pulse signal.

In the embodiment of the present invention, the cancellation pulse shaping filter module 608 includes a peak scheduling module and $n$ peak cancellation pulse shaping filters (CPGs), $6<=n<=8$, and $n$ is a positive integer to ensure that a plurality of peaks can be simultaneously processed within a certain period of time, so that a good crest factor reduction effect can be obtained after each level of cancellation processing. The function of the peak scheduling module is to ensure the cooperative work of a plurality of CPGs within a certain period of time. Once a certain CPG enters the working state, its processing cannot be interrupted within the effective length of a filter coefficient. The peak scheduling module allocates the newly arrived peak cancellation pulse to other idle CPG according to the principle of first in and first out processing. Only after the current CPG completes the shaping filter processing of current peak cancellation pulse, its working state can be set to an idle state, and the next newly arrived peak cancellation pulse is allowed to be processed. The number of CPGs determines the maximum number of peaks that can be processed at the same time in a filter coefficient length cycle; the more the CPGs are, the more peaks can be processed in a filter coefficient length, but the hardware resource overhead is higher. In the embodiment of the present invention, the cancellation pulse shaping filter module 608 includes 6 to 8 CPGs, where the CPGs perform the cancellation pulse shaping filter processing on the signal outputted by the coordinate inverse transformation module 607 and the sub filter coefficients outputted by the filter coefficient generation module 606 to obtain a shaped cancellation pulse signal.

The peak cancellation processing module 609 is configured to reversely superpose the shaped cancellation pulse signal outputted by the cancellation pulse shaping filter module 608 with a second IQ signal obtained by delaying the first IQ signal to obtain a signal after crest factor reduction.

The embodiment of the present invention provides a crest factor reduction apparatus based on a polyphase structure, which is different from the traditional crest factor reduction apparatus, in which all the peak cancellation pulse shaping filter modules in the traditional pulse cancellation crest factor reduction apparatus use a set of fixed filter coefficients for processing. According to the embodiments of the present invention, the shaping filter processing of a cancellation pulse signal is completed according to a different group of filter coefficients corresponding to different peak signal position information, so that the phase-compensated shaped cancellation pulse signal and the modulus envelope signal of the cancellation pulse signal have substantially the same change trend, which ensures more accurate alignment between the peaks of the shaped cancellation pulse signal and the cancellation pulse signal, and obtains better crest factor reduction performance and lower hardware implementation resource overhead.

Embodiment 3:

For a better understanding, the crest factor reduction method and crest factor reduction apparatus based on a polyphase structure will be described by a specific example in the embodiment of the present invention. The crest factor reduction apparatus based on a polyphase structure is shown in FIG. 6. As shown in FIG. 8, the specific implementation operations include:

In S801, *IQ* data entering the crest factor reduction apparatus is interpolated to a suitable data rate by the interpolation module.

In the embodiment of the present invention, the rate of *IQ* data entering the crest factor reduction apparatus is 184.32 Msps, and after the interpolation module performs double interpolation on input signals through primary HB interpolation filters, the data rate is 368.64 Msps.

In S802, the amplitudes and phases, respectively denoted as *amp* and *php,* of the signals are calculated by the coordinate transformation module based on the interpolated *IQ* data outputted by the interpolation module.

In S803, maximum value screening is performed on the output amplitude information *amp* in one interpolation cycle by the peak screening module.

That is, every two adjacent amplitude signals in a group are compared in one interpolation cycle and a maximum value is retained as new amplitude information, denoted as *amp_dsmp;* meanwhile, the phase information corresponding to the new amplitude is retained as new phase information, denoted as *php_dsmp.*

In S804, for the amplitude information *amp_dsmp,* a peak cancellation pulse signal is obtained by a peak search mode in the peak search module.

In the embodiment of the present invention, the amplitudes greater than a threshold *thr* are retained, then the peak amplitudes greater than the threshold are further screened out within a given interval length len, the maximum value is selected for retention, and the remaining amplitudes are set to zero; and finally, the threshold *thr* is subtracted from the obtained peak amplitude to extract a noise amplitude corresponding to the peak cancellation pulse, denoted as *amp_noise.*

In S805, the position of the phase information *php_dsmp* in one interpolation cycle is marked by the compensation phase acquisition module, to determine compensation phase information *pha.*

The peak position information *Loc* of the phase information *php_dsmp* in one interpolation cycle is divided by 2 to obtain a remainder, and the remainder 0 or 1 is used as the value *of pha.*

In S806, *IQ* restoration is performed on the phase information *php_dsmp* and the peak noise information *amp_noise* by the coordinate inverse transformation module, the restored output signals being denoted as *noise_i* and *noise_q.*

In S807, multiple filter coefficients stored in the filter coefficient generation module are read and controlled according to the compensation phase information, to output in real time a sub filter coefficient matching the current peak, denoted as *sub_filter.*

In the embodiment of the present invention, the polyphase filter coefficients corresponding to

$$f'(k) = W \times [\sum_{i=1}^{M} e^{j2\pi(k-N) \times \frac{f_i}{m \times f_s}} \times g(k)]$$

$k = 0,1,...,N$ are divided into two sets of sub filter coefficients, respectively $h_0$ and $Ph_1$. When *pha* is 0, the sub filter $Ph_0$ is outputted; and *when pha* is 1, the sub filter $Ph_1$ is outputted.

In S808, shaped cancellation pulse signals are obtained from the output peak noise and the output sub filter coefficients by the cancellation pulse shaping filter module.

Convolution operation is performed on the *noise i* and the sub filter coefficients *sub_filter,* and on the *noise_q* and the sub filter coefficients *sub_filter,* respectively, to obtain cancellation pulse signals, denoted as *cp_i* and *cp_q.*

In S809, delay compensation is performed on the *IQ* data of the crest factor reduction apparatus, and cancellation operation is performed on the delayed *I* and *Q* signals and the shaped cancellation pulse signals respectively to obtain signals after crest factor reduction.

FIG. 3 is a performance simulation comparison diagram of the crest factor reduction method provided by an embodiment of the present invention and the traditional crest factor reduction method. It can be seen from the figure that the crest factor reduction method provided by the embodiment of the present invention has significantly better crest factor reduction performance than the traditional crest factor reduction method at the same input rate. In the figure, the simulation example is a two-carrier LTE 20M signal TM3.1 source, the input signal rate is 184.32 Msps, the two carrier signals are configured to 140 M, and the figure shows performance comparison simulation of EVM and Par after crest factor reduction under different target peak-to-average ratios. In the figure, 301 is the crest factor reduction performance of the apparatus of the present invention, and 302 is the crest factor reduction performance of the traditional crest factor reduction method. From the simulation results, when the solution of the embodiment of the present invention reaches the same Par index under a large bandwidth, the deterioration of EVM is significantly better than that of the traditional crest factor reduction solution, and as Par decreases, the improvement effect on the EVM index becomes better and better, which is equivalent to the fact that the embodiment of the present invention can obtain a lower peak-to-average ratio (Par) index under the same damage condition of EVM. From the simulation analysis, when the EVM of the embodiment of the present invention is damaged by about 5% in this configuration example, a peak-to-average ratio gain of more than 0.3dB can be obtained compared with the traditional solution.

Embodiment 4:

An embodiment of the present invention further provides a computer-readable storage medium, which includes volatile or non-volatile, removable or non-removable media implemented in any method or technology for storing information (such as computer-readable instructions, data structures, computer program modules, or other data). The computer-readable storage medium includes but is not limited to a RAM (Random Access Memory), a ROM (Read-Only Memory), an EEPROM (Electrically Erasable Programmable read only memory), a flash memory or other storage technology, a CD-ROM (Compact Disc Read-Only Memory), a digital versatile disk (DVD) or other optical disk storage, magnetic cassettes, magnetic tapes, disk storage or other magnetic storage devices, or any other media that can be used to store desired information and that can be accessed by a computer.

The computer-readable storage medium in the embodiment of the present invention may be used to store one or more computer programs, and the stored one or more computer programs may be executed by a processor to implement at least one operation of the above-mentioned crest factor reduction method based on the polyphase structure.

Hence, those skilled in the art should understand that all or some of the operations in the method and the functional modules/units in the system and apparatus disclosed above can be implemented as software (which can be implemented by computer program codes executable by a computing apparatus), firmware, hardware, and an appropriate combination thereof. In a hardware implementation, the division between the functional modules/units mentioned above does not necessarily correspond to the division of physical components; for example, one physical component may have multiple functions, or one function or operation may be collaboratively executed by a plurality of physical components. Some or all of the physical components may be implemented as software executed by a processor, such as a central processing unit, a digital signal processor or a microprocessor, or implemented as hardware, or implemented as an integrated circuit, such as an application-specific integrated circuit.

In addition, it is well known to those of ordinary skill in the art that the communication media generally include computer-readable instructions, data structures, computer program modules, or other data in modulated data signals such as carriers or other transmission mechanisms, and may include any information transmission media. Therefore, the present invention is not limited to any particular combination of hardware and software.

The above are further detailed descriptions of the embodiments of the present invention in combination with specific implementations, and the specific embodiments of the present invention are not limited to these descriptions. For those of ordinary skill in the technical field to which the present invention belongs, a number of simple deductions or substitutions may be made without departing from the concept of the present invention, and these deductions or substitutions should be regarded as falling within the protection scope of the present invention.

**Claims**

1. A crest factor reduction method based on a polyphase structure, comprising:

    interpolating an input first in-phase quadrature, IQ, signal by $m$ times and performing coordinate transformation to obtain amplitude information and phase information of the first IQ signal;
    screening the amplitude information to extract a maximum peak signal;
    determining compensation phase information according to peak position information corresponding to the maximum peak signal, and determining a corresponding set of sub filter coefficients from polyphase filter coefficients based on the compensation phase information, the polyphase filter coefficients including at least two sets of sub filter coefficients; and
    completing peak-to-average ratio reduction processing according to the set of sub filter coefficients to obtain a signal after crest factor reduction.

2. The crest factor reduction method based on the polyphase structure according to claim 1, wherein completing peak-to-average ratio reduction processing according to the set of sub filter coefficients to obtain the signal after crest factor reduction including:

    performing peak search on the extracted maximum peak signal to determine a peak cancellation pulse signal;

performing coordinate inverse transformation on the peak cancellation pulse signal and performing cancellation pulse shaping filter processing together with the set of sub filter coefficients to obtain a shaped cancellation pulse signal; and

reversely superposing the shaped cancellation pulse signal with a second IQ signal obtained by delaying the first IQ signal to obtain the signal after crest factor reduction.

3. The crest factor reduction method based on the polyphase structure according to claim 1, wherein interpolating the input first IQ signal by *m* times includes:

interpolating the first IQ information by *m* times through any one of a half-band, HB, filter bank, Farrow filter interpolation, Lagrangian interpolation, and Newton interpolation.

4. The crest factor reduction method based on the polyphase structure according to claim 2, wherein screening the amplitude information to extract the maximum peak signal includes:

based on a principle of maximum value screening, extracting a signal with a maximum amplitude value from each set of *m* pieces of information as the maximum peak signal for the amplitude information, wherein the principle of maximum value screening includes:

$$p(i) = \max[d_{ij}] \; i = 0,1,2...; j=0,1,...,m\text{-}1$$

where *p* is the maximum peak signal, *m* is an interpolation multiple, $d_{ij}$ is a data sampling point after interpolation, and i is a corresponding sampling point identifier before interpolation.

5. The crest factor reduction method based on the polyphase structure according to claim 4, wherein determining the peak cancellation pulse signal includes:

performing threshold decision on each maximum peak signal, retaining a peak signal greater than a threshold, and setting a peak signal less than the threshold to zero;

performing maximum value screening on the peak information greater than the threshold within a preset length search interval window, to determine a maximum peak within the preset length search interval window, and setting remaining peak information to zero; and

subtracting the threshold from the maximum peak to obtain the peak cancellation pulse signal.

6. The crest factor reduction method based on the polyphase structure according to any one of claims 1 to 5, wherein determining compensation phase information according to peak position information corresponding to the maximum peak signal includes:

taking a remainder obtained by dividing the peak position information by m as the compensation phase information;

$$pha = \text{Mod}(\text{Loc}, m);$$

where *pha* is the compensation phase information and is an integer, $pha \in [0,...,m\text{-}1]$, and *m* is an interpolation multiple.

7. The crest factor reduction method based on the polyphase structure according to claim 6, wherein the polyphase filter coefficients include:

$$f'(k) = W \times [\sum_{i=1}^{M} e^{j2\pi(k-N) \times \frac{f_i}{m \times f_s}} \times g(k)] \qquad k = 0,1,...,N$$

where $f'(k)$ is the polyphase filter coefficients, *W* is a normalization factor, *M* is the number of carriers, $g(k)$ is a filter coefficient under the interpolation *m* times $m^*f_s$ rate, and *N* is the order of a filter at the rate of $m^*f_s$; $f_i$ is a respective carrier frequency point corresponding to an up-sampling processing in a multi-carrier system, and $f_s$ is a data rate of a crest factor reduction input signal; *m* is the interpolation multiple.

8. The crest factor reduction method based on the polyphase structure according to claim 7, wherein the set of sub filter coefficients includes:

the polyphase filter coefficients dividing into $m$ items, each item corresponding to a set of sub filter coefficients;

$$ph_i = f^{'}[i:m:N]_{i=0,1,...,m\text{-}1};$$

where $ph_i$ is a sub filter coefficient, $m$ is the interpolation multiple, and $f'$ is the polyphase filter coefficients.

9. The crest factor reduction method based on the polyphase structure according to any one of claims 1 to 5, wherein determining the corresponding set of sub filter coefficients from the polyphase filter coefficients based on the compensation phase information includes:
determining, based on a principle of parity, the set of sub filter coefficients corresponding to the compensation phase information from a mapping relationship between compensation phase information and sub filters.

10. A crest factor reduction apparatus based on a polyphase structure, comprising:

an interpolation module, configured to interpolate an input first in-phase quadrature, IQ, signal by $m$ times;
a coordinate transformation module, configured to perform coordinate transformation on an interpolated first IQ information to obtain amplitude information and phase information of the first IQ signal;
a peak screening module, configured to screen the amplitude information to extract a maximum peak signal;
a compensation phase acquisition module, configured to determine compensation phase information according to peak position information corresponding to the maximum peak signal;
a filter coefficient generation module, configured to determine a corresponding set of sub filter coefficients from polyphase filter coefficients based on the compensation phase information, the polyphase filter coefficients including at least two sets of sub filter coefficients; and
a peak-to-average ratio reduction processing module, configured to complete peak-to-average ratio reduction processing according to the set of sub filter coefficients to obtain a signal after crest factor reduction.

11. The crest factor reduction apparatus based on the polyphase structure according to claim 10, wherein the compensation phase acquisition module is configured to take a remainder obtained by dividing the peak position information by m as the compensation phase information;

$$pha = \mathrm{Mod}(\mathrm{Loc}, m);$$

where $pha$ is the compensation phase information and is an integer, $pha \in [0,...,m\text{-}1]$, and $m$ is an interpolation multiple.

12. The crest factor reduction apparatus based on the polyphase structure according to claim 11, wherein the filter coefficient generation module includes a filter coefficient set storage module; the filter coefficient set storage module is configured to store the sub filter coefficients of the polyphase filter coefficients;
the polyphase filter coefficients include:

$$f^{'}(k) = W \times [\sum_{i=1}^{M} e^{j2\pi(k-N)\times\frac{f_i}{m\times f_s}} \times g(k)] \qquad k = 0,1,...,N$$

where $f'(k)$ is the polyphase filter coefficients, $W$ is a normalization factor, $M$ is the number of carriers, $g(k)$ is a filter coefficient under the interpolation $m$ times $m{*}f_s$ rate, and $N$ is the order of a filter at the rate of $m{*}f_s$; $f_i$ is a respective carrier frequency point corresponding to the up-sampling processing in a multi-carrier system, and $f_s$ is a data rate of a crest factor reduction input signal; $m$ is the interpolation multiple;
the sub filter coefficients include:

$$ph_i = f^{'}[i:m:N]_{i=0,1,...,m\text{-}1};$$

where $ph^i$ is a sub filter coefficient, $m$ is the interpolation multiple, and $f'$ is the polyphase filter coefficients.

**13.** The crest factor reduction apparatus based on the polyphase structure according to any one of claims 10 to 12, wherein the filter coefficient generation module further includes a filter coefficient reading control module; the filter coefficient reading control module is configured to, based on the principle of parity and a mapping relationship between compensation phase information and sub filters, extract a corresponding set of sub filter coefficients corresponding to the compensation phase information from the filter coefficient set storage module.

**14.** A computer-readable storage medium, wherein the computer-readable storage medium stores one or more computer programs, and the one or more computer programs are executable by one or more processors to implement the operations of the crest factor reduction method based on the polyphase structure according to any one of claims 1 to 9.

S101

Interpolate an input first IQ signal by m times and perform coordinate transformation to obtain amplitude information and phase information of the first IQ signal

S102

Screen the amplitude information to extract a maximum peak signal and perform peak search to determine a peak cancellation pulse signal

S103

Determine compensation phase information according to peak position information corresponding to the maximum peak signal, and determine a corresponding set of sub filter coefficients from polyphase filter coefficients based on the compensation phase information

S104

Complete peak-to-average ratio reduction processing according to the set of sub filter coefficients to obtain a signal after crest factor reduction

FIG. 1

201

Signal envelop after 2X interpolation
Original signal envelop
Cancellation pulse

202

FIG. 2-a

FIG. 2-b

FIG. 3

High peak-to-
average ratio
signal

Signal after
crest factor
reduction

Delay

Interpolation
module

Coordinate
transformation
module

Peak
screening
module

Peak search
module

Coordinate
inverse
transformation
module

Cancellation
pulse shaping
filter module

FIG. 4

DUC → CFR → DPD →

FIG. 5

FIG. 6

FIG. 7

Interpolate *IQ* data entering the crest factor reduction apparatus to a suitable data rate by the interpolation module

S801

↓

Calculate the amplitudes and phases, respectively denoted as *amp* and *php*, of the signals by the coordinate transformation module based on the interpolated IQ data outputted by the interpolation module

S802

↓

Perform maximum value screening on the output amplitude information *amp* in an interpolation cycle by the peak filtering module

S803

↓

For the amplitude information *amp_dsmp*, obtain a peak cancellation pulse signal by a peak search mode in the peak search module

S804

↓

Mark the position of the phase information *php_dsmp* in one interpolation cycle by the compensation phase acquisition module, to determine compensation phase information pha

S805

↓

Perform IQ restoration on the phase information *php_dsmp* and the peak noise information *amp_noise* by the coordinate inverse transformation module, the restored output signals being denoted as *noise_i* and *noise_q*

S806

↓

Read and control multiple filter coefficients stored in the filter coefficient generation module according to the compensation phase information, to output in real time a sub filter coefficient matching the current peak, denoted as sub_filter

S807

↓

Obtain shaped cancellation pulse signals from the output peak noise and the output sub filter coefficients by the cancellation pulse shaping filter module

S808

↓

Perform delay compensation on the IQ data of the crest factor reduction apparatus, and perform cancellation operation on the delayed I and Q signals and the shaped cancellation pulse signals respectively to obtain crest factor reduction signals

S809

FIG. 8

## INTERNATIONAL SEARCH REPORT

International application No.

**PCT/CN2020/081244**

### A. CLASSIFICATION OF SUBJECT MATTER

H04L 27/26(2006.01)i; H04L 25/03(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNKI; CNPAT; WPI; EPODOC; 3GPP; IEEE: 削峰, 峰值, 峰均比, 最大, 补偿, 相位, 抵消, 滤波器, 系数, CFR, peak, PAPR, maximum, phase, cancel+, filter, coefficient

### C. DOCUMENTS CONSIDERED TO BE RELEVANT

| Category* | Citation of document, with indication, where appropriate, of the relevant passages | Relevant to claim No. |
|---|---|---|
| X | CN 103188199 A (ZTE CORPORATION) 03 July 2013 (2013-07-03) description paragraphs [0012]-[0070], [0080]-[0096], figures 2-5 | 1-14 |
| X | CN 102075484 A (ZTE CORPORATION) 25 May 2011 (2011-05-25) description, paragraphs [0045]-[0096] | 1-14 |
| A | US 2015349994 A1 (TELEFONAKTIEBOLAGET L M ERICSSONPUBL) 03 December 2015 (2015-12-03) entire document | 1-14 |
| A | US 9313078 B1 (XILINX, INC.) 12 April 2016 (2016-04-12) entire document | 1-14 |
| A | CN 102480458 A (ZTE CORPORATION) 30 May 2012 (2012-05-30) entire document | 1-14 |
| A | WANG, Siqi et al. "Clipping-and-Bank-Filtering Technique in Joint Crest Factor Reduction and Digital Predistortion for Power Amplifiers" *2018 Asia-Pacific Microwave Conference (APMC)*, 17 January 2019 (2019-01-17), entire document | 1-14 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 June 2020** | **29 June 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/081244**

| Patent document cited in search report | | | Publication date (day/month/year) | Patent family member(s) | | | Publication date (day/month/year) |
|---|---|---|---|---|---|---|---|
| CN | 103188199 | A | 03 July 2013 | None | | | |
| CN | 102075484 | A | 25 May 2011 | None | | | |
| US | 2015349994 | A1 | 03 December 2015 | EP | 2929737 | A1 | 14 October 2015 |
| | | | | WO | 2014085976 | A1 | 12 June 2014 |
| US | 9313078 | B1 | 12 April 2016 | None | | | |
| CN | 102480458 | A | 30 May 2012 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910465000